# EUROPÄISCHE PATENTSCHRIFT

(11) **EP 4 100 703 B1**
(45) Veröffentlichungstag und Bekanntmachung des Hinweises auf die Patenterteilung: **11.10.2023**
(21) Anmeldenummer: 21700260.9
(22) Anmeldetag: 06.01.2021
(51) Int. Cl.: G01G 21/24

(54) **VERFAHREN ZUM HERSTELLEN EINES WÄGESYSTEMS**
METHOD FOR PRODUCING A WEIGHING SYSTEM
PROCÉDÉ POUR PRODUIRE UN SYSTÈME DE MESURE DE POIDS

(30) Priorität: 03.02.2020 DE 102020102606
(43) Veröffentlichungstag der Anmeldung: 14.12.2022
(73) Patentinhaber: Sartorius Lab Instruments GmbH & Co. KG, 37079 Göttingen (DE)
(72) Erfinder: KUHLMANN, Otto, 37120 Bovenden (DE); GEISLER, Matthias, 37176 Nörten-Hardenberg (DE)
(74) Vertreter: Novagraaf International SA
(86) Internationale Anmeldenummer: PCT/EP2021/050121
(87) Internationale Veröffentlichungsnummer: WO 2021/156010

(56) Entgegenhaltungen:
- EP-A1- 2 986 955
- GB-A- 2 124 396

## Beschreibung

### Gebiet der Erfindung

Die Erfindung betrifft ein Verfahren zum Herstellen eines Wägesystems, im Rahmen dessen
- zunächst ein Rohling mit
   + einer Basis, die wenigstens eine Wand aufweist, und
   + einem über Dünnstellengelenke an der Basis angelenkten und über Materialbrücken an der Basis festgelegten Hebel, der einen der Wand benachbarten Hebelbereich aufweist,

   modelliert wird,
   wobei die Wand und der ihr benachbarte Hebelbereich mit je einem Durchbruch, die miteinander fluchten, versehen werden, und
- sodann die Materialbrücken aufgetrennt werden.

### Stand der Technik

Eine gattungsgemäße gravimetrische Messvorrichtung ist bekannt aus der JP 2017-161299 A.

Gravimetrische Messvorrichtungen, insbesondere elektronische gravimetrische Messvorrichtungen, insbesondere solche, die nach dem Prinzip der elektromagnetischen Kompensation arbeiten (sog. EMK-Waagen) sind dem Fachmann allgemein bekannt. Sie umfassen regelmäßig ein sog. Wägesystem, d.h. eine komplizierte Anordnung von gefalteten Hebeln, Lenkern und Gelenken, die eine Lastaufnahme der Messvorrichtung unter Realisierung einer Weg- bzw. Kraftübersetzung mit dem eigentlichen Wägesensor, beispielsweise einem Spule-Magnet-System, verbindet. Ein solches Wägesystem umfasst regelmäßig eine Basis, die als fester Bezugspunkt dient und innerhalb der Messvorrichtung typischerweise fest mit deren Gehäuse verbunden ist und den festen Teil der Sensorik, insbesondere des Spule-Magnet-Systems, trägt. Hebel und Lenker sind relativ zu dieser Basis bewegbar, insbesondere über Gelenke an der Basis angelenkt. Bei modernen Präzisionswaagen sind sog. monolithische Wägesysteme weit verbreitet. Sie zeichnen sich dadurch aus, dass sämtliche oder zumindest nahezu sämtliche Bestandteile des Wägesystems einstückig miteinander verbunden sind, insbesondere aus einem zusammenhängenden Materialblock, typischerweise Aluminium, herausmodelliert sind. Ein solches monolithisches Wägesystem ist beispielsweise aus der EP 2 986 955 A1 bekannt.

Beim Herstellen eines solchen Wägesystems nimmt der Rohling im Laufe des Verfahrens eine immer filigranere Struktur an. Gleichwohl bleiben die auf ihn und seine Bestandteile wirkenden, durch die Bearbeitung selbst wie auch durch seine Handhabung wirkenden Kräfte, insbesondere Beschleunigungs- und Spannungskräfte, im Wesentlichen gleich. Sie sind regelmäßig deutlich größer als die bei Betrieb einer fertigen Messvorrichtung auf deren Wägesystem wirkenden Kräfte. Insbesondere in einer späten Phase des Herstellungsverfahrens besteht daher die Gefahr einer Beschädigung der sehr empfindlichen, typischerweise als Dünnstellengelenke ausgebildeten Gelenke, wenn Hebel und/oder Lenker durch besagte Kräfte zu übermäßigen Auslenkungen angeregt werden. Um dies zu verhindern, ist es üblich, zumindest den Haupthebel des Systems über Materialbrücken an der Basis festzulegen bzw. festgelegt zu lassen und diese Materialbrücken erst als finalen Bearbeitungsschritt aufzutrennen. Auf diese Weise bleiben Relativbewegungen von Hebeln, Lenkern und Gelenken relativ zur Basis bis zu besagtem finalen Bearbeitungsschritt unterbunden. Zusätzlich wird insbesondere bei EMK-Waagen der noch festgelegte Hebel als Referenz genutzt, um die (in der Regel optische) Abtast-Sensorik für die Hebellage, die zur Regelung des Messstroms benötigt wird, zu justieren.

Es hat sich allerdings gezeigt, dass gerade das Auftrennen der Materialbrücken, das häufig als ein Abkneifen vollzogen wird, zu einer erheblichen Hebelauslenkung führen kann, sodass der Rohling gerade im finalen Herstellungsstadium des Wägesystems besonders beschädigungs- und damit ausschussgefährdet ist.

Aus der eingangs bereits genannten JP 2017-161299 A ist eine gravimetrische Messvorrichtung mit einem Wägesystem der oben beschriebenen Art bekannt, wobei der Hebel, speziell der Haupthebel, des Wägesystems sowie eine zu dessen Endbereich benachbarte Wand der Basis miteinander fluchtende Durchbrüche aufweisen. Diese fluchtende Relativstellung ist insbesondere in der Gleichgewichtsstellung des Hebels bzw. der Messvorrichtung gegeben. In besagter Druckschrift wird vorgeschlagen, den Hebel zum Zwecke des Transportes der Messvorrichtung relativ zur Basis dadurch zu fixieren, dass ein Fixierbolzen formschlüssig in besagte Durchbrüche geschoben wird. Durch den Formschluss ist der Bolzen in radialer Richtung einerseits an der Basis festgelegt; andererseits ist der Hebel ebenfalls in radialer Richtung, insbesondere senkrecht zu seiner Schwenkachse, am Bolzen festgelegt. Auf diese Weise wird eine Relativbewegung des Hebels zur Basis unterbunden, sodass keine beim Transport der Messvorrichtung auftretenden Beschleunigungskräfte zu einer übermäßigen, die Gelenke beschädigenden Auslenkung des Hebels führen können.

Aus der GB 2 124 396 A ist ein Wägesystem mit einem Widerlagerstift bekannt. Dieser wird durch eine Öffnung im Grundkörper hindurch in den langen Hebelarm eingesetzt. Er sitzt sodann formschlüssig im langen Hebelarm, den Grundkörper hingegen durchsetzt er mit Spiel und begrenzt damit den Schwenkweg des langen Hebelarms.

### Aufgabenstellung

Es ist die Aufgabe der vorliegenden Erfindung, ein gattungsgemäßes Herstellungsverfahren für ein Wägesystem derart weiterzubilden, dass auch während der finalen Herstellungsphase eine Beschädigung der Gelenke verhindert wird.

### Darlegung der Erfindung

Diese Aufgabe wird in Verbindung mit den Merkmalen des Oberbegriffs von Anspruch 1 dadurch gelöst, dass vor dem Auftrennen der Materialbrücken ein Fixierbolzen derart in die Durchbrüche geschoben wird, dass er während des Auftrennens der Materialbrücken formschlüssig in die Durchbrüche eingreift.

Bevorzugte Ausführungsformen der Erfindung sind Gegenstand der abhängigen Ansprüche.

Der Kern der Erfindung besteht in der Übertragung des aus dem Kontext einer Transportsicherung für vollständige gravimetrische Messvorrichtungen bekannten Konzeptes der Hebelfixierung mittels Fixierbolzens auf das Herstellungsverfahren des Wägesystems. So haben die Erfinder erkannt, dass die für die Beschädigung einer Messvorrichtung während deren Transportes ursächlichen Kräfte trotz völlig anderer physikalischer Grundlagen durchaus ähnlich den für die Gelenkschädigung beim Durchkneifen der Materialbrücken im Rahmen des finalen Herstellungsschrittes eines Wägesystems ursächlichen Kräfte sind. Aufbauend auf diese Erkenntnis schlägt die vorliegende Erfindung nun die neuartige Verwendung eines dem bekannten Transportbolzen ähnlichen Fixierbolzens zur Fixierung des Hebels während des Herstellungsverfahrens des Wägesystems, insbesondere während des finalen Herstellungsschrittes, d.h. während der Auftrennung der Materialbrücken zwischen Hebel und Basis, vor.

Bei einer bevorzugten Ausführungsform ist vorgesehen, dass der Fixierbolzen wenigstens zwei koaxiale Axialabschnitte, nämlich einen distalen Endabschnitt und einen sich proximal an diesen anschließenden Hauptabschnitt, aufweist, wobei der Querschnitt des Hauptabschnitts wenigstens bereichsweise dem Querschnitt des Hebel-Durchbruchs entspricht und größer als der Querschnitt des distalen Endabschnitts ist. Für die oben geschilderte, grundlegende Wirkung der Erfindung im Rahmen der Wägesystem-Herstellung hat diese spezielle Dimensionierung des Fixierbolzens keine Bedeutung. In diesem Zusammenhang würde auch ein einfacher, zylindrischer Stift die beschriebene Funktion als Fixierbolzen zur Fixierung des Hebels in eine Sicherungsstellung erfüllen können. Die besondere Bedeutung der genannten Dimensionierung offenbart sich erst im Kontext einer gattungsgemäßen gravimetrischen Messvorrichtung, die sich durch besagte Dimensionierung des Fixierbolzens auszeichnet. Eine solche Fixierbolzen-Dimensionierung erlaubt nämlich insbesondere zwei Axialstellungen des Fixierbolzens, nämlich eine Ruhestellung, in der der formschlüssig und axial verschiebbar in dem Wand-Durchbruch gelagerte Fixierbolzen derart vorgeschoben ist, dass sein Hauptabschnitt formschlüssig in den Hebeldurchbruch eingreift. Diese Ruhestellung kann auch als Transportstellung bezeichnet werden und entspricht der im Kontext des Herstellungsverfahrens beschriebenen Sicherungsstellung während des finalen Herstellungsschrittes. Sie zeichnet sich durch eine formschlüssige Festlegung des Hebels an der Basis mittels des Fixerbolzens aus. Eine zweite, durch besagte Dimensionierung des Fixierbolzens ermöglichte Arbeitsstellung zeichnet sich dadurch aus, dass der Fixierbolzen gegenüber der vorbeschriebenen Ruhestellung derart zurückgezogen ist, dass sein distaler Endabschnitt mit radialem Abstand in den Hebel-Durchbruch eingreift und sein Hauptabschnitt axial außerhalb des Hebel-Durchbruchs positioniert ist. Der Formschluss des Fixierbolzen-Hauptabschnitts mit dem Wand-Durchbruch bleibt auch in der Arbeitsstellung erhalten. Mit anderen Worten zeichnet sich die Arbeitsstellung dadurch aus, dass der Hebel zwar relativ zur Basis schwenkbar ist, seine Auslenkung jedoch von dem seinen Durchbruch durchsetzenden distalen Endabschnitt des Fixierbolzens beschränkt ist. Bei übermäßiger Auslenkung des Hebels, wie sie beispielsweise bei einem zu harten Aufsetzen einer Last auf die Lastaufnahme der gravimetrischen Messvorrichtung auftreten kann, schlägt der Hebel mit der Innenwandung seines Durchbruchs am diesen durchsetzenden distalen Endabschnitt des Fixierbolzens an. Eine weitergehende Auslenkung, die zu einer Beschädigung der Gelenke führen könnte, wird auf diese Weise zuverlässig vermieden.

Einem derart dimensionierten Fixierbolzen kommt also eine vierfache Funktion zu: Erstens dient er der Ausschuss-Reduzierung im Rahmen der Wägesystem-Herstellung; zweitens dient er der Festlegung des Hebels als Referenz für die Justage der Abtastelektronik; drittens dient er (in grundsätzlich bekannter Weise) einer Transportsicherung der gravimetrischen Messvorrichtung; und viertens bildet er einen Sicherheitsanschlag für den Hebel während des Betriebs der gravimetrischen Messvorrichtung.

Hieraus ergibt sich das erfindungsgemäße Betriebsverfahren für eine vorzugsweise erfindungsgemäß hergestellte, erfindungsgemäße gravimetrische Messvorrichtung, welches sich dadurch auszeichnet, dass der Fixierbolzen formschlüssig und axial verschiebbar in dem Wand-Durchbruch gelagert ist und bedarfsweise
- zur Überführung der Messvorrichtung in eine Ruhestellung derart vorgeschoben geschoben wird, dass sein Hauptabschnitt formschlüssig in den Hebel-Durchbruch eingreift
   und
- zur Überführung der Messvorrichtung in eine Arbeitsstellung derart zurückgezogen wird, dass sein distaler Endabschnitt mit radialem Abstand in den Hebel-Durchbruch eingreift und sein Hauptabschnitt axial außerhalb des Hebel-Durchbruchs positioniert wird.

Der Fachmann wird erkennen, dass der Begriff des Durchbruchs im vorliegenden Kontext weit zu verstehen ist und sowohl Durchgangsöffnungen wie auch Sacklöcher umfasst. Als Querschnitt ist der jeweils funktional relevante Querschnitt, d. h. in der Regel der jeweils kleinste lichte Querschnitt einer Öffnung und der Außenquerschnitt des jeweils konkret wechselwirkenden Axialabschnittes eines Körpers zu verstehen. Auch wird der Fachmann erkennen, dass der Begriff des Durchgreifens nicht zwingend einen vollständigen Durchgriff impliziert.

Das Modellieren des Rohlings im Rahmen des erfindungsgemäßen Wägesystem-Herstellungsverfahrens kann, wie grundsätzlich bekannt, durch subtraktive Bearbeitung eines monolithischen Materialblocks erfolgen. Insbesondere ist es möglich, das erfindungsgemäße Wägesystem auf grundsätzlich dieselbe Weise, nämlich durch Fräsen, Bohren und Schleifen eines Material-, insbesondere eines Aluminiumblocks, wie herkömmlich bekannt, zu schaffen. Alternativ kann das Modellieren des Rohlings wenigstens bereichsweise auch durch ein additives Verfahren erfolgen. In ihrer stärksten Ausprägung wird bei dieser Ausführungsform das gesamte Wägesystem additiv, beispielsweise durch 3D-Druck, aufgebaut. Kombinationen subtraktiver und additiver Verfahrensschritte sind im Kontext der vorliegenden Erfindung jedoch ebenfalls möglich.

Die Querschnitte des distalen Endbereichs und des Hauptschnitts des Fixierbolzens sind bevorzugt kreisrund. Insbesondere im Rahmen eines subtraktiven Herstellungsverfahrens des Wägesystems lassen sich solche Formen durch einfaches Bohren des Rohlings schaffen. Im Kontext eines additiven Modellierungsverfahrens für das Wägesystem sind auch komplexere Querschnittsformen denkbar, die dann zugleich eine Verdrehsicherung des Fixierbolzens realisieren können. In der Praxis hat sich jedoch die Wahl kreisrunder Querschnittsformen bewährt.

Die oben beschriebene Grundform des erfindungsgemäßen Fixierbolzens mit einem dünneren distalen Endabschnitt und einem dickeren Hauptabschnitt kann in der Praxis komplexer ausgestaltet werden. So ist bei einer vorteilhaften Weiterbildung der Erfindung vorgesehen, dass der Hauptabschnitt des Fixierbolzens in zwei axiale Unterabschnitte, nämlich einen distalen und einen proximalen Unterabschnitt, unterteilt ist, wobei der Querschnitt des proximalen Unterabschnitts größer als der Querschnitt des distalen Unterabschnitts ist und dem Querschnitt des Wand-Durchbruchs entspricht. Ungeachtet dieser Ausgestaltung des Hauptabschnitts ist selbstverständlich der distale Endabschnitt mit einem nochmals kleineren Querschnitt versehen. Bei dieser Ausführungsform dient der proximale Unterabschnitt des Fixierbolzen-Hauptabschnitts im Wesentlichen dessen Lagerung im Wand-Durchbruch. Entsprechend stimmen deren Querschnitte auch überein. Der distale Unterabschnitt des Fixierbolzen-Hauptabschnitts dient der Funktion der Transportsicherung und ist derjenige Teil des Fixierbolzens, der zum Zwecke der Transportsicherung formschlüssig in den Hebeldurchbruch eingeschoben werden kann. Der sich distal anschließende, distale Endabschnitt hingegen dient der Funktion als Sicherheitsanschlag während des Betriebes und greift mit radialem Abstand in den Hebel-Durchbruch ein.

Denkbar sind auch Varianten, bei denen sich der distale Endabschnitt bis zu einer gegenüberliegenden Wand und in eine in dieser befindliche Ausnehmung hinein erstreckt. Diese Ausnehmung und der distale Endabschnitt des Fixierbolzens sind dabei vorzugsweise so dimensioniert, dass letzterer formschlüssig in erstere einzugreifen vermag. Hierdurch wird eine zweiseitige Lagerung des Fixierbolzens realisiert, wodurch grundsätzlich eine größere Stabilität der Fixierbolzen-Positionierung als bei einseitiger Lagerung ermöglicht wird. Allerdings hat sich in der Praxis herausgestellt, dass insbesondere die Längendimension des Fixierbolzens typischerweise hinreichend klein ist, um auch bei einseitiger Lagerung eine vollkommen hinreichende Stabilität zu erzielen.

Der Übergang zwischen dem distalen Endabschnitt und dem Hauptabschnitt des Fixierbolzens ist bevorzugt mit einer Anfasung versehen. Bei der Überführung des Fixierbolzens bzw. der gravimetrischen Wägevorrichtung von ihrer Betriebs- in ihre Ruhe- bzw. Transportstellung bewirkt diese Anfasung bei einem leicht aus seiner Gleichgewichtsstellung ausgelenkten Hebel dessen automatische Überführung in die Gleichgewichtsstellung. Insbesondere wird eine übermäßige Beaufschlagung des Hebels mit einer Lateralkraft vermieden.

Die Axialverschiebung des Fixierbolzens kann beispielsweise manuell erfolgen. In diesem Fall ist es besonders günstig, wenn der Fixierbolzen, wie allgemein bevorzugt vorgesehen, mittels einer Feststellschraube, die z.B. als Klemmschraube oder als kraft- und formschlüssig wirkende Feststellschraube ausgebildet sein kann, in unterschiedlichen Axialstellungen feststellbar ist. Eine versehentliche Verschiebung wird damit weitestgehend ausgeschlossen.

Allerdings kann alternativ zur manuellen Fixierbolzen-Verschiebung auch vorgesehen sein, dass die gravimetrische Messvorrichtung weiter einen motorischen Antrieb umfasst, mittels dessen der Fixierbolzen axial verschiebbar ist. Die Motorsteuerung kann mit der allgemeinen Waagensteuerung gekoppelt sein. Damit wird die Fixierbolzen-Verschiebung jeder Fehlbedienung vollständig entzogen. Da der Motor in der Regel auch eine Festlegung des Fixierbolzens in der jeweiligen Zielstellung bewirkt, kann bei dieser Ausführungsform meist auch ohne weiteres auf die oben erwähnte Feststellschraube verzichtet werden.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht eines beispielhaften Wägesystems,
- Figur 2:: eine Schnittdarstellung durch das Wägesystem von Figur 1 entlang der Schnittlinie II, IV - II, IV,
- Figur 3:: eine Vergrößerung des Ausschnitts III von Figur 2,
- Figur 4:: eine Schnittdarstellung durch das Wägesystem von Figur 1 entlang der Schnittlinie II, IV - II, IV sowie
- Figur 5:: eine Vergrößerung des Ausschnitts V von Figur 4.

### Beschreibung bevorzugter Ausführungsformen

Gleiche Bezugszeichen in den Figuren deuten auf gleiche oder analoge Elemente hin.

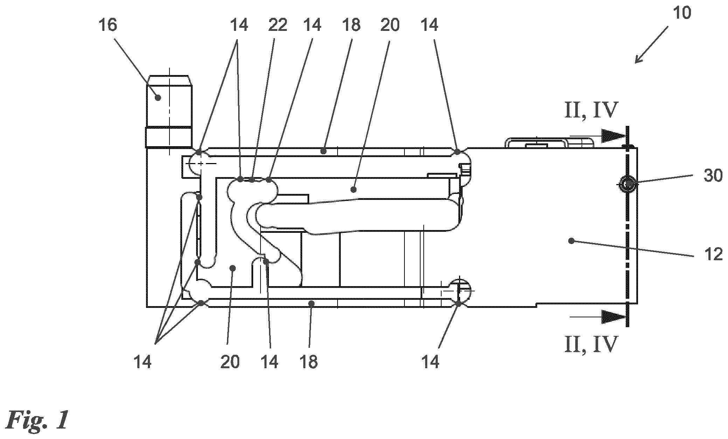

Figur 1 zeigt rein der Orientierung halber eine Seitenansicht eines beispielhaften Wägesystems 10, in welchem die vorliegende Erfindung realisiert ist. Das Wägesystem 10 umfasst eine Basis 12, die als sein fester Referenzpunkt zu verstehen ist. Über Dünnstellengelenke 14 ist eine Lastaufnahme 16, die innerhalb einer vollständigen gravimetrischen Messvorrichtung typischerweise eine Waagschale trägt, mittels Lenkern 18 angelenkt. Auslenkungen der Lastaufnahme 16 werden über einen mehrstufigen Hebel 20 zu einem in Figur 1 nicht dargestellten, in der funktionsbereiten gravimetrischen Messvorrichtung im Inneren der Basis 12 beheimateten Sensor übertragen. Einzelne Abschnitte des Hebels 20 sind über weitere Dünnstellengelenke 14 und ein Koppelglied 22 miteinander verbunden.

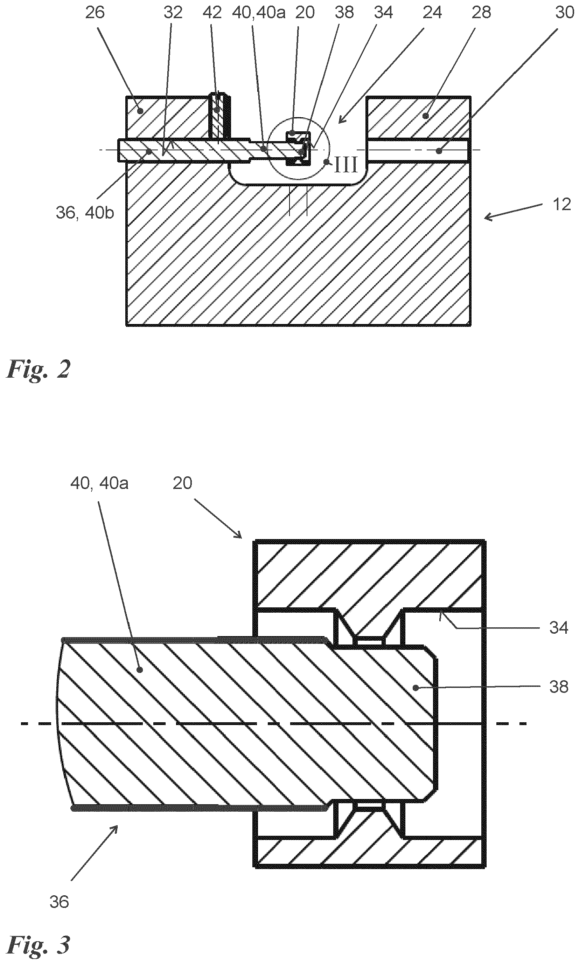

Ein freier Endbereich des Hebels 20 befindet sich im Bereich der Schnittlinie II, IV - II, IV und ist in den Figuren 2 bis 5 in größerem Detail dargestellt.

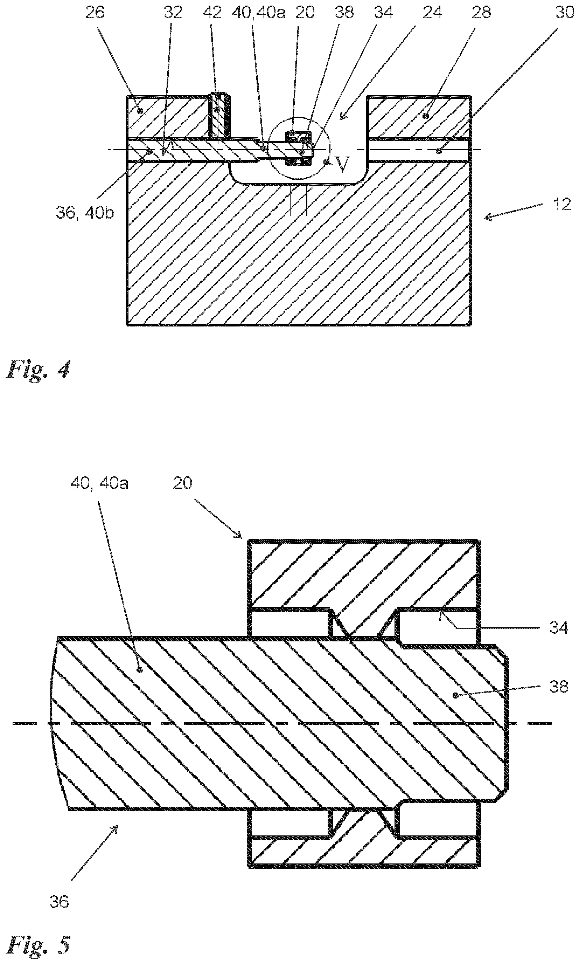

Die Figuren 2 und 4 zeigen das Wägesystem 10 in einer Schnittdarstellung entlang der Schnittlinie II, IV - II, IV in zwei unterschiedlichen Stellungen, nämlich in einer Betriebsstellung (Figur 2) und einer Ruhestellung (Figur 4). Die Figuren 3 und 5 zeigen jeweils vergrößerte Darstellungen entsprechend den Vergrößerungskreise III in Figur 2 bzw. V in Figur 4. Die Figuren 2 bis 5 sollen nachfolgend, soweit möglich, gemeinsam diskutiert werden.

Bei der dargestellten Ausführungsform bildet die Basis 12 einen Hebelkanal 24, der sich zwischen zwei Wänden 26, 28 erstreckt. Die in den Figuren 2 und 4 links dargestellte Wand 26 soll nachfolgend schlicht als "Wand" 26 bezeichnet werden, wohingegen die in den Figuren 2 und 4 rechts dargestellte Wand 28 als "gegenüberliegende Wand" 28 angesprochen werden soll. Beide Wände 26, 28 sind von einer Durchgangsbohrung 30 durchsetzt, die im Inneren der Wand 26 die Funktion eines Lagerkanals 32 erfüllt und bei der dargestellten Ausführungsform innerhalb der gegenüberliegenden Wand 28 keine Funktion erfüllt und lediglich praktischen Erwägungen des Herstellungsverfahrens geschuldet ist.

Auch der Hebel 20 weist einen Durchbruch 34 auf, dessen Querschnitt (an seiner engsten Stelle) kleiner ist als der Querschnitt des als Lagerkanal dienenden Durchbruchs 32 der Wand 26. Bei der dargestellten Ausführungsform ist der Hebel-Durchbruch 34 mit einer schneidenartigen Verjüngung versehen, die seinen (erfindungsrelevanten) Querschnitt definiert und für eine erhöhte Präzision sorgt. Grundsätzlich könnte der Hebel-Durchbruch 34 auch mit einem gleichmäßigen Querschnitt ausgestaltet sein.

Im Wand-Durchbruch 32 ist ein Fixierbolzen 36 axial verschieblich gelagert. Der Fixierbolzen 36 weist einen distalen Endabschnitt 38 geringeren Querschnitts und einen Hauptabschnitt 40 größeren Querschnitts auf. Bei der dargestellten Ausführungsform ist der Hauptabschnitt 40 in einen distalen Unterabschnitt 40a und einen proximalen Unterabschnitt 40b unterteilt. Der Querschnitt des distalen Endabschnitts 38 ist kleiner als der Querschnitt des Hebel-Durchbruchs 34; der Querschnitt des distalen Unterabschnitts 40a des Hauptabschnitts 40 entspricht dem Querschnitt des Hebel-Durchbruchs 34; und der Querschnitt des proximalen Unterabschnitts 40b des Hauptabschnitts 40 entspricht dem Querschnitt des Wand-Durchbruchs 32. Auf diese Weise ist der Fixierbolzen 36 verkippsicher und axial verschiebbar im Wand-Durchbruch 32 gelagert.

In der in den Figuren 2 und 3 dargestellten Betriebsstellung ist der Fixierbolzen 36 so positioniert, dass sein distaler Endabschnitt 38 die engste Stelle des Hebel-Durchbruchs 34 vollumfänglich beabstandet durchgreift. Der Hebel 20 ist also in beschränktem Maße gegenüber der Basis 12 verschwenkbar. Insbesondere bei nach dem EMK-Prinzip arbeitenden Waagen, bei deren ordnungsgemäßem Betrieb lediglich infinitesimale Hebelauslenkungen auftreten, genügt dies vollkommen. Bei unsachgemäßer Behandlung, beispielsweise bei zu hartem Aufsetzen einer Last auf die Waagschale der gravimetrischen Messvorrichtung, kann es jedoch zu größeren Ausschlägen kommen, die allerdings in der dargestellten Betriebsstellung durch ein Anschlagen der Innenwandung des Hebel-Durchbruchs 34 am distalen Endabschnitt 38 des Fixierbolzens 36 gestoppt werden. Eine Überlastung der empfindlichen Dünnstellengelenke 14 wird auf diese Weise verhindert.

Nach Betrieb und insbesondere zur Vorbereitung für einen Transport der gravimetrischen Messvorrichtung kann der Fixierbolzen 36 axial vorgeschoben werden, sodass er die in den Figuren 4 und 5 dargestellte Position einnimmt. Hier durchsetzt der Hauptabschnitt 40, insbesondere dessen distaler Unterabschnitt 40a, den Hebel-Durchbruch 34 formschlüssig. Hierdurch wird jegliche Auslenkung des Hebels 20 unterbunden.

Um eine unbeabsichtigte Axialverschiebung des Fixierbolzens 36 zu verhindern, weist die dargestellte Ausführungsform zusätzlich eine in den Lagerkanal 32 mündende, bei der gezeigten Ausführungsform als einfache Klemmschraube ausgebildete Feststellschraube 42 auf, mit der der Fixierbolzen 36 geklemmt werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist es denkbar, den distalen Endabschnitt 38 des Fixierbolzens 36 bis zur gegenüberliegenden Wand 28 hin zu verlängern und dort in einer entsprechend dimensionierten Ausnehmung axialverschieblich zu lagern.

### Bezugszeichenliste

- 10: Wägesystem
- 12: Basis
- 14: Dünnstellengelenk
- 16: Lastaufnahme
- 18: Lenker
- 20: Hebel
- 22: Koppelglied
- 24: Hebelkanal
- 26: Wand
- 28: gegenüberliegende Wand
- 30: Bohrung
- 32: Wand-Durchbruch/Lagerkanal
- 34: Hebel-Durchbruch
- 36: Fixierbolzen
- 38: distaler Endabschnitt von 36
- 40: Hauptabschnitt von 36
- 40a: distaler Unterabschnitt von 40
- 40b: proximaler Unterabschnitt von 40
- 42: Feststellschraube

## Patentansprüche

1. Verfahren zum Herstellen eines Wägesystems (10), im Rahmen dessen
- zunächst ein Rohling mit
+ einer Basis (12), die wenigstens eine Wand (26) aufweist, und
+ einem über Dünnstellengelenke (14) an der Basis (12) angelenkten und über Materialbrücken an der Basis (12) festgelegten Hebel (20), der einen der Wand (26) benachbarten Hebelbereich aufweist,
modelliert wird,
wobei die Wand (26) und der ihr benachbarte Hebelbereich mit je einem Durchbruch (32, 34), die miteinander fluchten, versehen werden, und
- sodann die Materialbrücken aufgetrennt werden,
**dadurch gekennzeichnet,**
**dass** vor dem Auftrennen der Materialbrücken ein Fixierbolzen (36) derart in die Durchbrüche (32, 34) geschoben wird, dass er während des Auftrennens der Materialbrücken formschlüssig in die Durchbrüche (32, 34) eingreift.

2. Verfahren nach Anspruch 1,
**dadurch gekennzeichnet,**
**dass** der Fixierbolzen (36) wenigstens zwei koaxiale Axialabschnitte (38, 40), nämlich einen distalen Endabschnitt (38) und einen sich proximal an diesen anschließenden Hauptabschnitt (40), aufweist, wobei der Querschnitt des Hauptabschnitts (40) wenigstens bereichsweise dem Querschnitt des Hebel-Durchbruchs (34) entspricht und größer als der Querschnitt des distalen Endabschnitts (38) ist.

3. Verfahren nach einem der vorangehenden Ansprüche,
dass das Modellieren des Rohlings durch subtraktive Bearbeitung eines monolithischen Materialblocks erfolgt.

4. Verfahren nach einem der vorangehenden Ansprüche,
**dadurch gekennzeichnet,**
**dass** das Modellieren des Rohlings wenigstens bereichsweise durch ein additives Verfahren erfolgt.

## Claims

1. Method for producing a weighing system (10), in the context of which:
- first a blank is modeled, said blank comprising
+ a base (12) having at least one wall (26), and
+ a lever (20) which is hinged to the base (12) via thin-section joints (14) and is secured to the base (12) via material bridges, said lever having a lever region adjacent to the wall (26),
wherein the wall (26) and the lever region adjacent thereto are each provided with an aperture (32, 34), said apertures being aligned with each other, and
- then the material bridges are cut open,
**characterized**
**in that**, before the material bridges are cut open, a fixing bolt (36) is pushed into the apertures (32, 34) such that it engages in the apertures (32, 34) with a form fit while the material bridges are being cut open.

2. Method according to claim 1,
**characterized**
**in that** the fixing bolt (36) comprises at least two coaxial axial portions (38, 40), namely a distal end portion (38) and a main portion (40) proximally adjoining the latter, wherein the cross-section of the main portion (40) corresponds at least in part to the cross-section of the lever aperture (34) and is larger than the cross-section of the distal end portion (38).

3. Method according to any one of the preceding claims,
in that the modeling of the blank takes place by subtractive machining of a monolithic block of material.

4. Method according to any one of the preceding claims,
**characterized**
**in that** the modeling of the blank takes place at least in part by an additive process.

## Revendications

1. Procédé de fabrication d'un système de pesage (10), dans le cadre duquel
- au moins une ébauche comportant
+ une base (12) qui présente au moins une paroi (26), et
+ un levier (20), articulé sur la base (12) par le biais d'une charnière de portion mince (14) et fixé sur la base (12) par le biais de ponts de matière et présentant une zone de levier adjacente à la paroi (26),
est modelée,
dans lequel la paroi (26) et la zone de levier qui lui est adjacente sont dotées chacune d'un percement (32, 34), qui sont alignés mutuellement, et
- ensuite les ponts de matière sont séparés,
**caractérisé en ce que**
avant la séparation des ponts de matière, un boulon de fixation (36) est poussé dans les percements (32, 34) de telle sorte qu'il vient en prise par engagement positif dans les percements (32, 34) pendant la séparation des ponts de matière.

2. Procédé selon la revendication 1,
**caractérisé en ce que**
le boulon de fixation (36) présente au moins deux segments axiaux coaxiaux (38, 40), à savoir un segment terminal distal (38) et un segment principal (40) s'adjoignant de manière proximale à ce dernier, la section transversale du segment principal (40) correspondant au moins par endroits à la section transversale du percement de levier (34) et étant supérieure à la section transversale du segment terminal distal (38).

3. Procédé selon l'une des revendications précédentes, le modelage de l'ébauche s'effectue par traitement soustractif d'un bloc de matière monolithique.

4. Procédé selon l'une des revendications précédentes, **caractérisé en ce que**
le modelage de l'ébauche s'effectue au moins par endroits par le biais d'un procédé additif.
